Europäisches Patentamt

European Patent Office

Office européen des brevets

(11) Numéro de publication : **0 298 801 B1**

(12) **FASCICULE DE BREVET EUROPEEN**

(45) Date de publication du fascicule du brevet :
**18.03.92 Bulletin 92/12**

(51) Int. Cl.[5] : **H01M 4/02, H01M 6/18**

(21) Numéro de dépôt : **88401494.5**

(22) Date de dépôt : **16.06.88**

(54) **Procédé d'assemblage de constituants d'un générateur électrochimique au lithium en films minces.**

(30) Priorité : **18.06.87 FR 8708542**

(43) Date de publication de la demande :
**11.01.89 Bulletin 89/02**

(45) Mention de la délivrance du brevet :
**18.03.92 Bulletin 92/12**

(84) Etats contractants désignés :
**AT BE CH DE ES FR GB IT LI LU NL SE**

(56) Documents cités :
**EP-A- 0 013 199**
**EP-A- 0 143 566**
**EP-A- 0 146 245**
**EP-A- 0 147 929**
**GB-A- 2 148 586**
**US-A- 4 621 035**

(56) Documents cités :
**JOURNAL OF THE ELECTROCHEMICAL
SOCIETY, vol. 132, no. 12, décembre 1985,
pages 3061-3062, Manchester, NH, US; K.
WEST et al.: "A rechargeable all-solid-state
sodium cell with polymer"**
**PATENT ABSTRACTS OF JAPAN, vol. 9, no.
178 (E-330)[1901], 23 juillet 1985; & JP-A-60 49
573 (HITACHI MAXELL K.K.) 18-03-1985**

(73) Titulaire : **SOCIETE NATIONALE ELF
AQUITAINE**
**Tour Elf, 2, Place de la Coupole, La Défense 6
F-92400 Courbevoie (FR)**
Titulaire : **HYDRO-QUEBEC**
**75, Boulevard René Levesque Ouest
Montréal Québec H2Z 1A4 (CA)**

(72) Inventeur : **Gauthier, Michel**
**237, rue Saint Ignace
La Prairie Québec (CA)**
Inventeur : **Belanger, André**
**625 Blain
Sainte Julie Québec J0L 2CO (CA)**

(74) Mandataire : **Boillot, Marc**
**SOCIETE NATIONALE ELF AQUITAINE
Division Propriété Industrielle Tour Elf
F-92078 Paris la Défense Cédex 45 (FR)**

## Description

L'invention a trait à un procédé d'assemblage de constiiuants d'un générateur électrochimique au lithium, lesdits constituants se présentant sous la forme de films minces.

Les générateurs électrochimiques au lithium concernés par l'invention sont des générateurs réalisés sous la forme de films minces et comprenant une électrode négative constituée par un feuillard de lithium ou d'un de ses alliages, une électrode composite positive et un électrolyte solide constitué par la solution d'un sel dans un matériau macromoléculaire. De tels générateurs sont par exemple. décrits dans le brevet européen délivré le 15 Février 1984 sous le numéro 0013199 intitulé : "Générateurs électrochimiques de production de courant et matériaux pour leur fabrication".

Pour réaliser de tels générateurs, il est nécessaire, afin de satisfaire aux exigences de minceur des différentes couches, de pouvoir disposer de films minces de lithium, c'est-à-dire des films ayant une épaisseur inférieure à 40 μm (microns) et toutefois supérieure à 1 ou 2 μm (microns). En effet, dans cette technologie, les capacités surfaciques des électrodes positives peuvent varier de 1 Coulomb à 20 Coulombs par $cm^2$, soit en ce qui concerne le lithium des épaisseurs de l'ordre de 1 à 40 μm, suivant le faible excès de lithium que l'on désire conserver par rapport à la capacité de l'électrode positive. La présence d'un excès plus significatif de lithium correspondant à des épaisseurs de lithium plus élevées, par exemple supérieures à 40 μm est rapidement pénalisante en terme de densité d'énergie stockée par unité de volume compte tenu des grandes surfaces de piles nécessaires à une technologie basée sur des films minces de polymères. En plus, on a intérêt à limiter l'excès de lithium vu son coût qui peut représenter un facteur important du coût global des accumulateurs au lithium.

D'autre part, la technologie utilisée pour la réalisation de ces générateurs, repose sur la production, la manipulation et l'assemblage en continu des éléments de la pile complète, généralement à partir des éléments constituants individuels de la pile, à savoir anode, électrolyte et cathode, qui sont habituellement élaborés, séchés et stockés séparément jusqu'à la phase ultime d'assemblage de la pile. Ce stockage desdits constituants prend d'ordinaire la forme d'un enroulement duquel on peut prélever en continu le matériau pour procéder à l'assemblage de la pile. Il est essentiel que les trois constituants anode, électrolyte cathode possèdent une tenue mécanique suffisante pour qu'ils puissent être entraînés à bonne vitesse dans divers équipements tels que des laminoirs et autres dispositifs permettant d'effectuer les opérations de transfert, de collage et d'assemblage final de la pile.

L'électrolyte supporte très bien ces contraintes car il est normalement manipulé sur un support polymérique détachable et bien adpaté aux exigences mécaniques ; il en va de même pour l'électrode positive qui est associée la plupart du temps à un support métallique conducteur qui agit à titre de collecteur de courant.

Par contre, pour l'électrode négative à base de lithium, il en va tout autrement. En effet, le lithium métallique à des épaisseurs inférieures à 50 μm n'a plus la tenue mécanique nécessaire pour être manipulé dans les procédés d'assemblage mentionnés ci-dessus. En plus de sa tendance à coller sur presque toutes les surfaces, il est difficile à entraîner avec un bon contrôle du centrage (alignement) puisqu'il est mou et non élastique.

La citation EP-A-0147929 décrit un procédé pour la réalisation d'un générateur électrochimique à électrolyte liquide et comportant une électrode négative en lithium, dans lequel un feuillard de lithium est tout d'abord encapsulé, par extrusion à l'état fondu, à l'aide d'une gaine protectrice en une matière plastique telle que, notamment, le polyéthylène, puis le feuillard de lithium encapsulé est laminé jusqu'à l'épaisseur désirée pour l'électrode négative, de l'ordre de 75 μm d'après les exemples, après quoi la gaine protectrice est retirée et l'électrode de lithium exempte de gaine est dirigée vers l'étape d'assemblage des éléments constituant le générateur électrochimique, ladite étape comportant l'application d'un film poreux séparateur d'électrodes sur chacune des deux faces de l'électrode négative en lithium, puis l'application d'un film d'électrode positive sur l'un des films séparateurs d'électrodes.

Suivant l'invention, on propose un procédé perfectionné d'assemblage de constituants d'un générateur électrochimique au lithium, lesdits constituants se présentant sous la forme de films minces et comprenant d'une part une électrode négative à base de lithium ou d'un alliage de lithium d'épaisseur inférieure à 50 μm et d'autre part un constituant renfermant au moins un film mince apparent d'un électrolyte solide polymère à conduction par l'ion lithium, lequel procédé permet de réaliser une manipulation et un assemblage aisés du film de lithium ou d'alliage de lithium et ainsi de remédier aux inconvénients précités.

Le procédé d'assemblage suivant l'invention se caractérise en ce que l'on produit un précurseur d'électrode négative consistant en un ensemble intermédiaire formé d'un film mince de lithium ou d'un alliage à base de lithium d'épaisseur inférieure à 50 μm disposé entre deux films de matière plastique inerte, dont l'un est très facilement pelable, c'est-à-dire présente une adhésion au lithium correspondant à un effort d'arrachement inférieur à 100 g/cm ($10^4$ N/cm), et l'autre présente une adhésion contrôlée au lithium, ladite adhésion étant intermédiaire entre l'adhésion du film facilement pelable au lithium et l'adhésion du lithium à l'électrolyte polymère, en opérant par laminage d'un feuillard de lithium ou d'alliage à base de lithium entre lesdits films de matière plastique inerte et en ce que l'on applique contre l'électrolyte solide polymère du constituant renfermant l'électrolyte la face de l'ensemble intermédiaire portant le film très facilement pelable après avoir retiré ce dernier par pelage, en opérant à une température et sous une pression suffisante pour faire adhérer le lithium ou l'alliage à base de lithium de l'ensemble intermédiaire audit électrolyte, puis éventuellement on sépare totalement ou partiellement le film en matière plastique présentant une adhésion contrôlée au lithium d'avec l'électrode négative par pelage.

L'ensemble intermédiaire procurseur d'électrode négative peut être produit en laminant le feuillard de lithium ou d'alliage à base de lithium entre deux films de matière plastique inerte très facilement pelables, puis en remplaçant l'un desdits films très facilement pelables par le film de matière plastique inerte présentant l'adhésion contrôlée au lithium, ladite adhésion étant suffisante pour permettre un entrainement dans les laminoirs.

Le film de matière plastique inerte d'adhésion contrôlée au lithium ainsi que le' film de matière plastique très facilement pelable peuvent être choisis parmi les divers films de matière plastique inerte qui présentent l'adhésion souhaitée au lithium ou une absence d'adhésion suivant le cas. De préférence, on utilise des films de polypropylène ou de polyéthylène. L'état de surface du film de matière plastique inerte et la nature physico-chimique dudit film peuvent être modifiés de façon à contrôler son adhésion au lithium, c'est-à-dire que le film peut être adhérent puis facilement arrachable ou encore non adhérent.

Par exemple, un film de polyéthylène ou de polypropylène peut être traité par la technique dite de "l'effet couronne", qui consiste essentiellement à soumettre le film à des décharges électriques de haut voltage de manière à produire des oxydations très fortes en surface dudit film qui se traduisent par une augmentation des propriétés d'adhésion. En particulier le film de maître plastique inerte, notamment film de polypropylène ou de polyéthylène, possède une face n'adhérant pratiquement pas au lithium tandis que son autre face a été traitée par effet couronne pour lui conférer l'adhésion contrôlée désirée au lithium, cette dernière face étant en contact avec le film de lithium.

La température à laquelle on réalise l'application de l'ensemble intermédiaire sur l'électrolyte polymère est avantageusement inférieure à 60°C pour ne pas affecter la chimie de surface du lithium.

Le constituant renfermant au moins un film mince apparent d'électrolyte solide polymère à conduction par l'ion lithium, que l'on assemble à l'ensemble intermédiaire, peut litre constitué uniquement d'un film mince dudit électrolyte. Ledit constituant peut également consister en une demi-pile forme d'une électrode positive en film mince dont l'une des faces est recouverte d'un film d'électrolyte polymère solide, l'assemblage résultant alors constituant une pile complète électrode négative au lithium/électrolyte solide polymère/électrode positive.

Après réalisation de l'assemblage entre le constituant renfermant un film mince apparent d'électrolyte solide polymère à conduction par l'ion lithium et l'ensemble intermédiaire, le film de matière plastique inerte d'adhésion contrôlée au lithium peut être pelé au moins localement pour permettre la collection du courant ou la pose d'un collecteur métallique.

L'intérêt du procédé d'assemblage suivant l'invention et de l'ensemble intermédiaire utilisé dans la mise en oeuvre de ce procédé réside dans la facilité avec laquelle ils permettent de réaliser un générateur électrochimique au lithium. En effet, pour la réalisation de tels générateurs, il est nécessaire de pouvoir appliquer le lithium sur la couche à l'électrolyte polymère solide. Ce lithium étant selon l'invention supporté par un support plastique facilement arrachable, il est aisé de transférer le lithium sur l'électrolyte en utilisant le support plastique comme support mécanique puis ensuite d'arracher ce support plastique de façon à constituer le générateur électrochimique par enroulement ou par toute autre méthode appropriée, après avoir éventuellement posé des collecteurs métalliques de courant par exemple en nickel ou en cuivre. Le support plastique est arraché après le transfert contre l'électrolyte adhésif en prenant appui contre les autres éléments de la pile, à savoir l'électrolyte et l'électrode positive munie ou non de son collecteur de courant.

Les générateurs électrochimiques selon l'invention reposent sur l'utilisation d'électrolyte solide polymère possédant une forte proportion de phases amorphes, puisque ce sont elles qui assurent les propriétés de conductivité. Ces phases amorphes confèrent également à l'électrolyte polymère des propriétés de très forte adhésion, qui permettent d'arracher le film du matériau plastique support sans arracher le film de lithium de l'électrolyte.

Les avantages de cette façon de manipuler le lithium sont donc en ce qui concerne les propriétés mécaniques la forte résistance de l'ensemble, essentiellemeni résistance à l'étirement, la facilité de découper le film supporté ou de l'entraîner dans une machine permettant le transfert du lithium et l'assemblage de la pile complète. En fait, le lithium ainsi supporté peut être manipulé en tous points comme un film de matière plastique.

Au niveau de l'électrochimie de ces systèmes, un des intérêts de ce type d'assemblage par transfert d'un lithium supporté par un support facilement arrachable est de préserver en tout temps l'état de surface du lithium, c'est-à-dire l'uniformité et la composition chimique de cette surface, de façon à maximiser les performances en cyclage et les caractéristiques d'interface de l'électrode négative lors de son utilisation dans des générateurs en films minces du type précité où l'épaisseur de l'électrolyte peut se situer entre 5 et 50 µm (microns).

Un autre intérêt du procédé d'assemblage suivant l'invention et de l'ensemble intermédiaire utilisé dans la mise en oeuvre dudit procédé est de permettre l'assemblage de piles monofaces où le lithium est en contact avec l'électrolyte solide polymère sur une de ses faces et peut donc conserver au moins localement son support plastique adhésif. C'est le cas notamment des enroulements temporaires qui serviront de base à la fabrication de plusieurs types ou formes de batteries et des petits dispositifs enroulés où la collection de courant à électrode négative peut être assurée par l'extrémité. Mais de tels films de lithium supporté par un film polymère peuvent permettre de poursuivre l'assemblage final des générateurs par transfert sur la seconde face de lithium d'une seconde demi-pile, après que le film de matériau polymère couvrant cette seconde face ait été arraché. On peut donc obtenir ainsi des générateurs électrochimiques bi-faces qui permettent d'utiliser au maximum le feuillard de lithium puisque celui-ci est en contact avec l'électrolyte par ses deux faces.

La méthode pour la production de l'ensemble intermédiaire à qui consiste à laminer un feuillard de lithium entre deux films de matière plastique inerte dont l'un est très facilement pelable et l'autre est soit très facilement pelable ou bien présente une adhésion contrôlée au lithium telle que définie précédemment, présente un grand intérêt car elle est facile à mettre en oeuvre et permet d'obtenir aisément un film mince de lithium d'épaisseur inférieure à 50 µm sans risque pour l'état de surface du lithium ainsi laminé.

La production de lithium aux épaisseurs exigées par la technologie des générateurs électrochimiques en films minces n'est pas simple. En effet, le lithium est habituellement produit par électrolyse en lingots. Ces lingots sont par la suite purifiés pour faire du lithium de qualité "batterie" à faible taux d'azote (nitrures) et de sodium. Pour la plupart des besoins "batterie", ce lithium est alors passé à travers une machine d'extrusion qui produit du lithium à des épaisseurs de l'ordre de 150 µm quand les largeurs sont de 7,5 cm ou 10 cm. Tel quel, ce lithium n'est pas bien adapté aux générateurs électrochimiques films minces pour deux raisons, à savoir une épaisseur beaucoup trop importante et une surface pas assez uniforme.

Le lithium étant un matériau très ductile et malléable, on peut donc l'amincir par laminage. Toutefois, comme les propriétés adhésives du lithium sont telles qu'il a tendance à se coller à tous les matériaux y compris les métaux les plus nobles et les substances chimiquement inertes, cet amincissement doit être réalisé à l'aide de matériaux polymériques durs. Dans les techniques courantes, le lithium est laminé directement entre deux rouleaux fabriqués en un matériau polymérique dur et résistant au lithium. La qualité de la surface du film de lithium obtenu est alors tributaire de la qualité de la surface de ces rouleaux, qui est réutilisée à chaque tour de laminage, lesdits rouleaux ayant rapidement tendance à se rayer et devant être resurfacés régulièrement sous peine de produire des défauts sur la surface du lithium laminé. Comme on sait que dans une technologie de production de générateurs électrochimiques au lithium mettant en jeu des films minces, il est impératif que la surface du film de lithium servant d'électrode négative soit uniforme, brillante comme un miroir et exempte de toute imperfection, on conçoit que la technique connue précitée de laminage du lithium soit très contraignante pour produire un film de lithium ayant les qualités de surface requise pour être utilisé dans une telle technologie. De plus, le lithium aminci à moins de 50 µm n'a plus beaucoup de tenue mécanique et il a tendance à se déchirer dès qu'on le manipule un peu sévèrement ou qu'on tente de l'entraîner dans un procédé automatique d'assemblage de piles.

La méthode qui prévoit le laminage du lithium entre deux films à matière plastique inerte comme indiqué précédemment, autorise un contrôle précis de l'état et de la nature physico-chimique de la surface du lithium même aux épaisseurs inférieures à 50 µm. Le film de lithium ainsi obtenu, par laminage entre deux films de matière plastique inerte sans imperfection et dont on renouvelle sans cesse la surface, présente des qualités de surface très supérieures à celles du film de lithium produit par la technique connue de laminage direct du lithium entre deux rouleaux de matériau plastique dur. De plus, en maintenant le contact des films en maitière plastique avec le lithium, on peut protéger la surface de ce dernier contre des attaques par la phase gazeux ou encore contrôler la composition chimique du lithium et son état de surface en traitant préalablement le film de plastique avec certains gaz ou certains liquides susceptibles de réagir avec le lithium d'une manière contrôlée.

La méthode précitée de laminage du lithium permet en outre de prévoir, pour cette opération de laminage, des températures, qui sont inférieures aux températures critiques susceptibles d'engendrer des couches de passivation à la surface du lithium. Cette méthode de laminage évite donc l'apparition de telles couches de passivation à la surface du lithium, qui ne manquent pas de se produire dans les procédés de coextrusion du lithium à l'état fondu avec des polymères pouvant servir d'agents de protection et/ou de séparateurs.

Dans le mode de réalisation particulier de la méthode de laminage, selon lequel un feuillard de lithium est laminé, jusqu'à une épaisseur inférieure à 50 µm, entre deux films de matière plastique inerte, notamment polypropylène ou polyéthylène, très facilement pelables, c'est-à-dire pratiquement non adhérents au lithium (effort d'arrachement inférieur à 100 g/cm), on peut préparer du lithium mince jusqu'à des épaisseurs d'environ 15 à 20 $\mu$m. La surface du lithium mince ainsi obtenu est d'excellente qualité et réfléchissante comme un miroir. De plus, le film de lithium se trouve à la fois supporté et protégé entre les deux films de matière plastique qui ont servi à le produire. L'adhérence est tout juste suffisante pour maintenir le film de lithium en place entre lesdits films et il peut être enroulé tel quel grâce à la possibilité qu'ont les deux films non adhérents de glisser l'un par rapport à l'autre lors de l'enroulement intermédiaire de l'ensemble réalisé. Le lithium ainsi laminé est ensuite transféré sur un film de matière plastique inerte présentant l'adhésion contrôlée au lithium définie précédemment, ce qui permet l'entrainement à haute vitesse dans les laminoirs. Le film plastique d'adhésion contrôlée pourra être éventuellement maintenu en place pour être utilisé comme isolant élecrique entre le lithium et le collecteur de courant de l'électrode positive dans les piles obtenues par enroulement. L'autre collection du courant (négative) pourra être assurée par le lithium lui-même à son extrémité ou par des amenées de courant latérales.

L'invention sera mieux comprise à la lecture de l'exemple suivant , donné de manière illustrative et non limitative.

EXEMPLE:

Un film de lithium de 1,5 mm d'épaisseur est tout d'abord laminé entre deux films de polypropylène ayant chacun une épaisseur voisine de 30 $\mu$m. Lors de cette opération de laminage, l'épaisseur du film de lithium est réduite à 30 $\mu$m sans qu'une adhésion du lithium à son support plastique ne se développe. Ce film de lithium est ensuite relaminé en utilisant deux films de plastique asymétriques du point de vue de l'adhésion au lithium, à savoir un premier film de polypropylène, dont la surface en regard du lithium a été traits par effet couronne et présente de ce fait une bonne adhésion au lithium, et un second film de polypropylène pratiquement pas adhérent au lithium. Le laminoir est alors réglé de façon à ce que la pression produite ne réduise pas de façon significaitve l'épaisseur de lithium mais soit suffisante pour assurer l'adhésion dudit film au support de polypropylène traité par effet couronne. Le film de lithium ainsi produit est enroulé sur lui-même, après avoir enlevé le film de polypropylène peu adhérent, sans qu'il y ait de problèmes d'adhésion entre les couches successives de lithium et de film support, le dos du film de polypropylène n'étant pas traité par effet couronne.

Ces états sont effectuées sous une atmosphère d'air sec contenant moins de 300 ppm d'$H_2O$ et le laminage du lithium est effectué entre des rouleaux d'acier dur à la température ambiante.

Le rouleau de lithium mince supporté sur le polypropylène est ensuite utilisé dans un second laminoir chauffant de façon à effectuer le transfert de ce lithium sur un film de 80 $\mu$m d'épaisseur d'un électrolyte polymère constitué par un film de polyoxyde d'éthylène de masse moléculaire 5 000 000 dans lequel est dissous du perchlorate de lithium dans un rapport O/Li de 15/1, ce film d'électrolyte étant obtenu par évaporation d'une solution de ses constituants dans de l'acétonitrile.

A la sortie du laminoir, le support de polypropylène peut être décollé du lithium qui est ensuite découpé en bandes. Ces bandes sont ensuite transférées à une température voisine de 90°C sur des électrodes positives composites contenant de l'oxyde de vanadium (40 % volumique), du noir d'acétylène (10 % volumique) et un matériau macromoléculaire constitué par un polyoxyde d'éthylène de masse moléculaire 900 000, élaboré par évaporation sur un collecteur de nickel. Un second collecteur de nickel est également placé sur la face libre du lithium. On a réalisé ainsi des piles dont la surface est de 62 cm$^2$ et dont la capacité est de 196 Coulombs. On a vérifié que les taux d'utilisation obtenus à 80°C correspondent à ceux prévus, compte tenu des capacités mises en jeu et des performances généralement attendues de telles réalisations. Ceci confirme donc la qualité des transferts effectués à partir de ce lithium libre, sa facilité de mise en oeuvre et l'absence de problèmes d'interface.

A titre d'information, on peut souligner l'existence de la demande de brevet EP-A-0298800 des mêmes demandeurs, qui concerne la réalisation de générateurs électrochimiques au lithium à électrolyte solide polymère se présentant sous la forme de films minces, par formation d'ensembles multicouches en associant en continu, par lamination, au moins un sous-ensemble bicouche préformé électrolyte solide polymère/électrode positive composite, une couche d'un métal faiblement ductile et une couche à base de lithium, cette dernière étant éventuellement supportée sur un film pelable de matière plastique, et en amenant le sous-ensemble bicouche à l'étape de lamination sur un support consistant en la couche de métal faiblement ductile ou en un film pelable de matière plastique.

**Revendications**

1. Procédé d'assemblage de constituants d'un générateur électrochimique, lesdits constituants se présentant sous la forme de films minces et comprenant d'une part une électrode négative consistant en un film à base de lithium ou d'un alliage de lithium d'épaisseur inférieure à 50 $\mu$m et d'autre part un constituant renfermant au moins un film mince apparent d'un électrolyte solide polymère à conduction par l'ion lithium, caractérisé en ce que l'on produit un précurseur d'électrode négative consistant en un ensemble intermédiaire formé d'un film mince de lithium ou d'un alliage à base de lithium d'épaisseur inférieure à 50μm disposé entre deux films de matière plastique inerte, dont l'un est très facilement pelable, c'est-à-dire présente une adhésion au lithium correspondant à un effort d'arrachement inférieur à 100 g/cm (10⁴ N/cm), et l'autre présente une adhésion contrôlée au lithium, ladite adhésion étant intermédiaire entre l'adhésion du film facilement pelable au lithium et l'adhésion du lithium à l'électrolyte polymère, en opérant par laminage d'un feuillard de lithium ou d'alliage à base de lithium entre lesdits films de matière plastique inerte et en ce que l'on applique contre l'électrolyte solide polymère du constituant renfermant l'électrolyte la face de l'ensemble intermédiaire portant le film très facilement pelable après avoir retiré ce dernier par pelage, en opérant à une température et sous une pression suffisante pour faire adhérer le lithium ou l'alliage à base de lithium de l'ensemble intermédiaire audit électrolyte, puis éventuellement on sépare totalement ou partiellement le film en matière plastique présentant une adhésion contrôlée au lithium d'avec l'électrode négative par pelage.

2. Procédé selon la revendication 1, caractérisé en ce que l'on produit l'ensemble intermédiaire précurseur d'électrode négative en laminant le feuillard de lithium ou d'alliage à base de lithium entre deux films de matière plastique inerte très facilement pelables, puis en remplaçant l'un desdits films très facilement pelables par le film de matière plastique inerte présentant l'adhésion contrôlée au lithium.

3. Procédé selon la revendication 1 ou 2, caractérisé en ce que le film de matière plastique inerte très facilement pelable est un film de polypropylène ou de polyéthylène.

4. Procédé selon l'une des revendications 1 à 3, caractérisé en ce que le film de matière plastique inerte d'adhésion contrôlée au lithium est un film de polypropylène ou de polyéthylène, dont la face venant au contact du film de lithium a été traitée par effet couronne pour lui conférer ladite adhésion contrôlée au lithium.

5. Procédé selon l'une des revendications 1 à 4, caractérisé en ce que l'on effectue l'application de l'ensemble intermédiaire sur l'électrolyte solide polymère à une température inférieure à 60 °C pour ne pas affecter la chimie de surface du lithium.

6. Procédé selon l'une des revendications 1 à 5, caractérisé en ce que le constituant renfermant le film apparent d'électrolyte solide polymère consiste en un film dudit électrolyte.

7. Procédé selon l'une des revendications 1 à 5, caractérisé en ce que le constituant renfermant le film apparent d'électrolyte solide polymère consiste en une demi-pile constituée d'une électrode positive en film mince dont l'une des faces est recouverte d'un film d'électrolyte polymère, l'assemblage résultant formant une pile complète électrode négative au lithium/électrolyte solide polymère/électrode positive.

8. Procédé selon la revendication 7, caractérisé en ce que le film de matière plastique inerte d'adhésion contrôlée au lithium est pelé, au moins localement, après réalisation de l'assemblage pour permettre la collection du courant ou la pose d'un collecteur métallique.

9. Procédé selon la revendication 7, caractérisé en ce que l'on pèle le film de matière plastique présentant une adhésion contrôlée au lithium, qui adhère à l'électrode négative, puis on applique sur la face libre de ladite électrode négative le côté électrolyte polymère d'une seconde demi-pile, l'assemblage résultant constituant un générateur électrochimique biface.

10. Procédé selon l'une des revendications 1 à 9, caractérisé en ce que le film mince de lithium de l'ensemble intermédaire a une épaisseur comprise entre 1 et 50 μm.

## Patentansprüche

1. Verfahren zum Zusammenbau der Komponenten eines elektrochemischen Generators, wobei diese die Form dünner Folien haben und einerseits eine negative Elektrode, bestehend aus einer Folie auf der Basis von Lithium oder einer Lithiumlegierung mit einer Stärke von unter 50 μm, und andererseits eine Komponente umfassen, die wenigstens eine sichtbare dünne Folie aus einem festen, durch Li-Ionen leitend gemachten Polymerelektrolyten darstellt, dadurch **gekennzeichnet**, daß man eine negative Vorläuferelektrode herstellt, die aus einem intermediären Schichtkörper besteht, gebildet aus einer dünnen Folie aus Lithium oder einer Lithiumlegierung mit einer Stärke von unter 50 μm, wobei diese Folie zwischen zwei inerten Kunststofffolien angeordnet ist, von denen die eine sehr leicht abziehbar ist, d.h. eine Haftung auf Lithium aufweist, die einer bereißbeanspruchung von unter 100 g/cm (10⁴ N/cm) entspricht, und die andere Folie eine gesteuerte Haftung auf Lithium aufweist, die zwischen derjenigen der von Lithium leicht abziehbaren Folie und der des Lithiums auf dem Polymerelektrolyten liegt, indem man ein Band aus Lithium oder einer Lithiumlegierung zwischen den inerten Kunststofffolien aufwalzt, und daß man auf den festen Polymerelektrolyten der diesen enthaltenden Komponente die Außenfläche des intermediären Schichtkörpers, der die sehr leicht abziehbare Folie aufweist, nach beziehen der letzteren aufbringt, und zwar bei einer Temperatur und unter einem Druck, die ausreichen, um das Lithium oder die Lithiumlegierung des intermediären Schichtkörpers auf dem Elektrolyten haften zu lassen, und danach gegebenenfalls die Kunststofffolie, die eine

gesteuerte Haftung auf Lithium aufweist, von der negativen Elektrode ganz oder teilweise durch Abziehen abtrennt.

2. Verfahren nach Anspruch 1, dadurch **gekennzeichnet**, daß man den intermediären Schichtkörper der negativen Vorläuferelektrode dadurch herstellt, daß man das Band aus Lithium oder einer Lithiumlegierung zwischen zwei sehr leicht abziehbare inerte Kunststoffolien aufwalzt und dann eine der beiden sehr leicht abziehbaren Folien durch die inerte Kunststoffolie mit gesteuerter Haftung auf Lithium ersetzt.

3. Verfahren nach Anspruch 1 oder 2, dadurch **gekennzeichnet**, daß die sehr leicht abziehbare inerte Kunststoffolie eine Polypropylen- oder Polyethylenfolie ist.

4. Verfahren nach einem der Ansprüche 1 bis 3, dadurch **gekennzeichnet**, daß die inerte Kunststoffolie mit gesteuerter Haftung auf Lithium eine Polypropylen- oder Polyethylenfolie ist, deren mit der Lithiumfolie in Kontakt tretende Fläche koronabehandelt wurde, um ihr die gesteuerte Haftung auf Lithium zu verleihen.

5. Verfahren nach einem der Ansprüche 1 bis 4, dadurch **gekennzeichnet**, daß man den intermediären Schichtkörper auf den festen Polymerelektrolyten bei einer Temperatur unter 60°C aufbringt, um die chemische Zusammensetzung der Lithiumoberfläche nicht zu verändern.

6. Verfahren nach einem der Ansprüche 1 bis 5, dadurch **gekennzeichnet**, daß die Komponente, die die sichtbare Folie aus einem festen Polymerelektrolyten umfaßt, aus einer Folie dieses Elektrolyten besteht.

7. Verfahren nach einem der Ansprüche 1 bis 5, dadurch **gekennzeichnet**, daß die Komponente, die die einen festen Polymerelektrolyten darstellende Folie umfaßt, aus einem Halbzelle besteht, der von einer positiven Elektrode aus einer dünnen Folie gebildet wird, deren eine Fläche mit einer Polymerelektrolytfolie überzogen ist und durch den Zusammenbau eine völlständige Zelle aus negativer Elektrode auf Lithium/fester Polymerelektrolyt/positive Elektrode entsteht.

8. Verfahren nach Anspruch 7, dadurch **gekennzeichnet**, daß die inerte Kunststoffolie mit gesteuerter Haftung auf Lithium nach dem Zusammenbau wenigstens stellenweise abgezogen wird, um eine Aufladung oder das Aufbringen eines Metallkollektors zu ermöglichen.

9. Verfahren nach Anspruch 7, dadurch **gekennzeichnet**, daß man die Kunststoffolie mit gesteuerter Haftung auf Lithium, die der negativen Elektrode anhaftet, abzieht und dann auf die freiliegende Fläche der negativen Elektrode die Polymerelektrolytseite einer zweiten Halb-Zelle aufbringt und durch den Zusammenbau einen zweiseitigen elektrochemischen Generator erhält.

10. Verfahren nach einem der Ansprüche 1 bis 9, dadurch **gekennzeichnet**, daß die dünne Lithiumfolie des intermediären Schichtkörpers eine Stärke zwischen 1 und 50 μm aufweist.

## Claims

1. Process of assembling the components of an electrochemical generator, the said components being in the form of thin films and comprising both a negative electrode contained in a film based on lithium or on a lithium alloy, which film has a thickness of less than 50 μm, and a component containing at least one visible thin film of a solid polymeric electrolyte for conduction by the lithium ion, characterised in that there is produced a precursor of the negative electrode consisting of an intermediate assembly formed of a thin film based on lithium or on a lithium alloy, which film has a thickness of less than 50 μm, located between two inert plastics material films, of which one is very easily strippable i.e. it has an adhesion to the lithium corresponding to a tearing force of less than 100 g/cm ($10^4$ N/cm), and the other has a controlled adhesion to the lithium, the said adhesion being intermediate between the adhesion of the easily strippable film to the lithium and the adhesion of the lithium to the polymeric electrolyte, operating by laminating a lithium or lithium-based alloy strip between the said inert plastics material films and in that there is applied, against the solid polymeric electrolyte of the component containing the electrolyte, the surface of the intermediate assembly supporting the very easily strippable film, after this latter has been removed by stripping, the work being carried out at a temperature and under a pressure sufficient to cause the lithium or lithium-based alloy of the intermediate assembly to adhere to the said electrolyte, after which the plastics material film having a controlled adhesion to the lithium may be completely or partially separated from the negative electrode by stripping.

2. Process according to claim 1, characterised in that an intermediate assembly is produced, which assembly is a precursor of the negative electrode, by lamination of the lithium or lithium-alloy based strip between two films of very easily strippable inert plastics material, and one of the said easily strippable films subsequently being replaced by the inert plastics material film having a controlled adhesion to the lithium.

3. Process according to claim 1 or 2, characterised in that the very easily strippable inert plastics material film is a polypropylene or polyethylene film,

4. Process according to one of claims 1 to 3, characterised in that the inert plastics materials film having controlled adhesion to the lithium is a polypropylene or polyethylene film of which the surface that comes into contact with the lithium film has been treated by means of the corona process in order to confer upon it the said controlled adhesion to the lithium.

5. Process according to one of claims 1 to 4, characterised in that the application of the intermediate assembly to the solid polymeric electrolyte is effected at a temperature of less than 60°C, in order not to effect the chemistry of the lithium surface.

6. Process according to one of claims 1 to 5, characterised in that the component containing the apparent solid polymeric electrolyte film consists of a film of the said electrolyte.

7. Process according to one of claims 1 to 5, characterised in that the component containing the visible solid polymeric electrolyte consists of a half-cell comprised of a positive electrode in a thin film, one surface of which is covered by a polymeric electrolyte, the resulting assembly forming a complete cell having the structure : lithium based negative electrode/solid polymeric electrolyte/positive electrode.

8. Process according to claim 7, characterised in that the inert plastics material film with controlled adhesion to the lithium is stripped, at least locally, after the assembly has been carried out to enable the current to be collected or a metal collector to be positioned.

9. Process according to claim 7, characterised in that the plastics material film having a controlled adhesion to the lithium which adheres to the negative electrode, is stripped and the polymeric electrolyte side of a second half-cell is then applied to the available surface of the said negative electrode, the resulting assembly constituting a dual-surface electrochemical generator.

10. Process according to one of claims 1 to 9, characterised in that the thin lithium film of the intermediate assembly has a thickness of between 1 and 50 μm.